# EUROPEAN PATENT APPLICATION

(11) **EP 4 350 808 A1**
(43) Date of publication of application: **10.04.2024**
(21) Application number: 21943855.3
(22) Date of filing: 12.11.2021
(51) Int. Cl.: H01M 4/36, H01M 4/485

(54) **POSITIVE ELECTRODE MATERIAL, PREPARATION METHOD THEREFOR, AND LITHIUM ION BATTERY**

(30) Priority: 04.06.2021 CN 202110621709
(71) Applicant: SVOLT ENERGY TECHNOLOGY CO., LTD, Changzhou, Jiangsu 213200 (CN)
(72) Inventor: WANG, Pengfei, hangzhou, Jiangsu 213200 (CN); YANG, Hongxin, hangzhou, Jiangsu 213200 (CN); LI, Zitan, hangzhou, Jiangsu 213200 (CN); QIAO, Qiqi, hangzhou, Jiangsu 213200 (CN); SHI, Zetao, hangzhou, Jiangsu 213200 (CN); GUO, Feng, hangzhou, Jiangsu 213200 (CN); XU, Xinpei, hangzhou, Jiangsu 213200 (CN)
(74) Representative: Albert Catala, Andrea
(86) International application number: PCT/CN2021/130207
(87) International publication number: WO 2022/252503

(57) **Abstract**

The present disclosure provides a cobalt-free and nickel-free positive electrode material and a preparation method therefor, and a battery. The preparation method includes: preparing a cobalt-free and nickel-free matrix material, and mixing the cobalt-free and nickel-free matrix material, a lithium source, and a divalent manganese compound for reaction to obtain the cobalt-free and nickel-free positive electrode material. By adding the divalent manganese compound, the generation of lamellar LiMnO₂ and spinel LiMn₂O₄ is inhibited, the generation of lamellar Li₂MnO₃ is promoted, and the cycle performance of the material is improved.

## Description

### TECHNICAL FIELD

The present disclosure relates to the field of battery technologies, and in particular, to a cobalt-free and nickel-free positive electrode material and a preparation method therefor, and a battery.

### BACKGROUND

With the development of the new energy market, ternary positive electrode materials have attracted a lot of attention due to their high energy density, high cycle, and high safety. In the current power market, large-scale commercial ternary materials such as NCM523 and NCM622 meet the requirements of hybrid vehicles to some extent, but the endurance mileage and safety performance of the hybrid vehicles still need to be improved. Moreover, the prices of cobalt and nickel elements in NCM continue to rise, which restrains the costs of batteries. In addition, the cobalt metal easily causes harm to the environment.

### SUMMARY

The following is the summary of subject matters detailed in the present disclosure. The summary is not intended to limit the present disclosure, but provides a cobalt-free and nickel-free positive electrode material and a preparation method therefor, and a battery.

The present disclosure provides a preparation method for a cobalt-free and nickel-free positive electrode material in one embodiment, including: preparing a cobalt-free and nickel-free matrix material, and mixing the cobalt-free and nickel-free matrix material, a lithium source, and a divalent manganese compound for reaction to obtain the cobalt-free and nickel-free positive electrode material.

In one embodiment provided by the present disclosure, the divalent manganese compound is added in the preparation process to inhibit the generation of lamellar LiMnO₂ and spinel LiMn₂O₄, promote the generation of Li₂MnO₃, and effectively avoid the occurrence of disproportionation reaction in the presence of Mn³⁺ and the Jahn-Teller effect in the presence of LiMn₂O₄ during charging and discharging in a cycling process, where the lamellar LiMnO₂ and spinel LiMn₂O₄ will result in capacity loss and poor material cycle, while the lamellar Li₂MnO₃ can effectively improve the cycle performance, so the preparation method has the characteristics of simple preparation process, low cost, low pollution, and high cycle performance.

In one embodiment provided by the present disclosure, a general formula of the cobalt-free and nickel-free matrix material is NaₓLi_{y}Mn_{0.75}O₂, where 0.8 ≤ x ≤ 1, and 0 ≤ y ≤ 0.35, for example, x is 0.80, 0.82, 0.84, 0.86, 0.88, 0.90, 0.92, 0.94, 0.96, 0.98, or 1.00, and y is 0, 0.03, 0.06, 0.09, 0.12, 0.15, 0.18, 0.21, 0.24, 0.27, 0.30, 0.33, or 0.35.

In one embodiment, the lithium source includes one of or a combination of at least two of lithium carbonate, lithium hydroxide, lithium chloride, or lithium fluoride.

In one embodiment, a preparation method for the cobalt-free and nickel-free matrix material includes: mixing a lithium salt, a manganese salt, and a sodium salt, where a molar ratio of lithium in the lithium salt, sodium in the sodium salt, and manganese in the manganese salt is (0.2-0.3): (0.9-1.1): (0.65-0.85); and heating the mixture to obtain the cobalt-free and nickel-free matrix material, where the molar ratio of lithium in the lithium salt, sodium in the sodium salt, and manganese in the manganese salt is, for example, 0.2: 0.9: 0.65, 0.2: 1: 0.75, 0.25: 1.1: 0.85, 0.25: 0.95: 0.8, or 0.3: 1.1: 0.85.

In one embodiment, the lithium salt includes one of or a combination of at least two of lithium carbonate, lithium hydroxide, lithium chloride, or lithium fluoride.

In one embodiment, the manganese salt includes one of or a combination of at least two of manganese acetate, manganese carbonate, manganese oxide, manganese dioxide, or manganese tetroxide.

In one embodiment, the sodium salt includes one of or a combination of at least two of sodium carbonate, sodium acetate, sodium chloride, or sodium bicarbonate.

In one embodiment, the heating in the preparation method for the cobalt-free and nickel-free matrix material is performed in an oxygen-containing atmosphere, where the oxygen-containing atmosphere is an air atmosphere with a flow rate of 5-10 L/min, for example, the flow rate is 5.0 L/min, 5.5 L/min, 6.0 L/min, 6.5 L/min, 7.0 L/min, 7.5 L/min, 8.0 L/min, 8.5 L/min, 9.0 L/min, 9.5 L/min, or 10.0 L/min; a temperature of the heating in the preparation method for the cobalt-free and nickel-free matrix material is 500-800°C, for example, the temperature is 500°C, 520°C, 540°C, 560°C, 580°C, 600°C, 620 °C, 640°C, 660°C, 680°C, 700°C, 720°C, 740°C, 760°C, 780°C, or 800°C; and time for the heating is 8-12 h, for example, the time is 8.0 h, 8.4 h, 8.8 h, 9.2 h, 9.6 h, 10.0 h, 10.4 h, 10.8 h, 11.2 h, 11.6 h, or 12.0 h.

In one embodiment provided by the present disclosure, the cobalt-free and nickel-free matrix material, the divalent manganese compound, and the lithium source are mixed to obtain a mixture, and a molar ratio of lithium to manganese in the mixture is (0.8-1.5): 1, for example, the molar ratio is 0.8: 1, 0.9: 1, 1.0: 1, 1.1: 1, 1.2: 1, 1.3: 1, 1.4: 1, or 1.5: 1.

In one embodiment, by controlling the addition amount of the divalent manganese compound, after the cobalt-free and nickel-free matrix material, the divalent manganese compound, and the lithium source are mixed to obtain a mixture, the molar ratio of lithium to manganese in the mixture is (0.8-1.5): 1, which effectively inhibits the formation of lamellar LiMnO₂, thereby improving the cycle performance of a battery; if the molar ratio of lithium to manganese is less than 0.8: 1, excessive lithium-deficient materials, such as spinel structures, will be formed, resulting in low capacity; and if the molar ratio of lithium to manganese is more than 1.5: 1, cost waste will be caused, and the total alkali content of the material is too high to affect the performance of the material.

In one embodiment provided by the present disclosure, the divalent manganese compound includes one of or a combination of at least two of MnO, Mn₃O₄, or MnCO₃.

In one embodiment, the divalent manganese compound includes a compound containing divalent manganese, such as Mn₃O₄, and also includes divalent manganese and trivalent manganese.

In one embodiment provided by the present disclosure, the mixing reaction is a melting reaction; a temperature of the mixing reaction is 400-800 °C, for example, the temperature is 400°C, 440°C, 480°C, 520°C, 560°C, 600 °C, 640 °C, 680 °C, 720 °C, 760 °C, or 800 °C ; and time for the mixing reaction is 4-8 h, for example, 4.0 h, 4.4 h, 4.8 h, 5.2 h, 5.6 h, 6.0 h, 6.4 h, 6.8 h, 7.2 h, 7.6 h, or 8.0 h.

In one embodiment, the material is sequentially washed and dried after the mixing reaction.

In one embodiment, the washing step includes: adding water to the material after reaction and washing the material for 10 min while stirring, where a mass of the added water is twice that of the material.

In one embodiment, the washing is to remove residual raw materials from the material after reaction. Excessive lithium salt is added in the preparation process, resulting in high residual alkali content of the material. In addition, the sodium salt formed in the calcination process is inactive. Therefore, the washing treatment is performed to remove the sodium salt and the residual alkali from the material.

In one embodiment provided by the present disclosure, the cobalt-free and nickel-free positive electrode material obtained after the mixing reaction is further coated, and a method for the coating includes the following steps: mixing the cobalt-free and nickel-free positive electrode material obtained by the reaction with AlPO₄, and performing primary calcination to obtain an AlPO₄-coated positive electrode material; and mixing the AlPO₄-coated positive electrode material with TiO₂, and performing secondary calcination to obtain an AlPO₄- and TiO₂-coated cobalt-free and nickel-free positive electrode material.

In one embodiment, double-layer coating with AlPO₄ and TiO₂ is performed, with TiO₂ as an outer coating. In the coating process, TiO₂ binds to Li⁺ diffused from the active material to generate Li₂TiO₃, which is a lithium ion conductor. The Li₂TiO₃ generated on the surface can improve the diffusion rate of ions. In addition, AlPO₄ serves as an inner coating, Al³⁺ diffuses into oxide lattices in the cycling process to stabilize the structure, and PO₄³⁻ interacts with Li⁺ to generate a good lithium ion conductor Li₃PO₄.

In one embodiment, a temperature of the primary calcination is 300-800 °C, for example, the temperature is 300°C, 350°C, 400°C, 450°C, 500°C, 550 °C, 600°C, 650°C, 700°C, 750°C, or 800°C; time for the primary calcination is 5-8 h, for example, the time is 5.0 h, 5.3 h, 5.6 h, 5.9 h, 6.2 h, 6.5 h, 6.8 h, 7.1 h, 7.4 h, 7.7 h, or 8.0 h; and an atmosphere for the primary calcination is air or oxygen.

In one embodiment, a temperature of the secondary calcination is 300-800 °C, for example, the temperature is 300°C, 350°C, 400°C, 450°C, 500°C, 550 °C, 600°C, 650 °C, 700°C, 750°C, or 800 °C; time for the secondary calcination is 5-8 h, for example, the time is 5.0 h, 5.3 h, 5.6 h, 5.9 h, 6.2 h, 6.5 h, 6.8 h, 7.1 h, 7.4 h, 7.7 h, or 8.0 h; and an atmosphere for the secondary calcination is air or oxygen.

In one embodiment provided by the present disclosure, based on a total mass of the cobalt-free and nickel-free positive electrode material, a coating amount of the AlPO₄ is 500-5000 ppm, for example, the coating amount is 500 ppm, 1000 ppm, 1500 ppm, 2000 ppm, 2500 ppm, 3000 ppm, 3500 ppm, 4000 ppm, 4500 ppm, or 5000 ppm.

In one embodiment, the coating amount of the AlPO₄ is controlled to 500-5000 ppm. If the coating amount is less than 500 ppm, problems of uneven material coating and thin coating are caused, and the effect of isolation from an electrolytic solution is poor, which increases side reactions, so that the electrical performance of the battery is poor. If the coating amount is more than 5000 ppm, the coating of the material is too thick, which hinders the intercalation and deintercalation of Li⁺, thereby affecting the capacity and rate performance of the material.

In one embodiment, based on the total mass of the cobalt-free and nickel-free positive electrode material, a coating amount of the TiO₂ is 500-5000 ppm, for example, the coating amount is 500 ppm, 1000 ppm, 1500 ppm, 2000 ppm, 2500 ppm, 3000 ppm, 3500 ppm, 4000 ppm, 4500 ppm, or 5000 ppm.

In one embodiment, the coating amount of the TiO₂ is controlled to 500-5000 ppm. If the coating amount is less than 500 ppm, problems of uneven material coating and thin coating are caused, and the effect of isolation from the electrolytic solution is poor, which increases side reactions, so that the electrical performance of the battery is poor. If the coating amount is more than 5000 ppm, the coating of the material is too thick, which hinders the intercalation and deintercalation of Li⁺, thereby affecting the capacity and rate performance of the material.

In one embodiment, the preparation method specifically includes the following steps:
(I) mixing a lithium salt, a sodium salt, and a manganese salt with a molar ratio of lithium, sodium, and manganese of (0.2-0.3): (0.9-1.1): (0.65-0.85), and heating the mixture at 500-800°C for 8-12 h in an air atmosphere with an air flow rate of 5-10 L/min to obtain the cobalt-free and nickel-free matrix material;
(II) mixing the cobalt-free and nickel-free matrix material prepared in step (I), a lithium source, and a divalent manganese compound to obtain a mixture in which a molar ratio of lithium to manganese is (0.8-1.5): 1, and performing a melting reaction at 400-800 °C for 4-8 h, followed by washing and drying; and
(III) mixing the dried cobalt-free and nickel-free positive electrode material with AlPO₄, and performing primary calcination at 300-800 °C in an air or oxygen atmosphere for 5-8 h to coat AlPO₄ with a coating amount of 500-5000 ppm; and mixing with TiO₂, performing secondary calcination at 300-800 °C in the air or oxygen atmosphere for 5-8 h to coat TiO₂ with a coating amount of 500-5000 ppm to obtain the cobalt-free and nickel-free positive electrode material.

In one embodiment of the present disclosure, a cobalt-free and nickel-free positive electrode material is provided, including lamellar LiMnO₃, spinel LiMn₂O₄, and lamellar Li₂MnO₃.

In one embodiment, a typical but non-limiting chemical formula of the cobalt-free and nickel-free positive electrode material is LiₐMn_{b}O₂, where 0.8 ≤ a ≤ 1, and 0.7 ≤ b <_ 0.8, for example, a is 0.80, 0.82, 0.84, 0.86, 0.88, 0.90, 0.92, 0.94, 0.96, 0.98, or 1.00, and b is 0.70, 0.71, 0.72, 0.73, 0.74, 0.75, 0.76, 0.77, 0.78, 0.79, or 0.80.

In one embodiment provided by the present disclosure, a molar ratio of the lamellar Li₂MnO₃ in the cobalt-free and nickel-free positive electrode material is 50-90%, such as 50%, 55%, 60%, 65%, 70%, 75%, 80%, 85%, or 90%.

In one embodiment provided by the present disclosure, the molar ratio of the lamellar Li₂MnO₃ in the cobalt-free and nickel-free positive electrode material is 70%.

In one embodiment provided by the present disclosure, a battery is provided, including a positive electrode, a negative electrode, and a separator, where the cobalt-free and nickel-free positive electrode material described in the foregoing embodiment is used in the positive electrode.

### BRIEF DESCRIPTION OF THE DRAWINGS

The accompanying drawings are used to provide a further understanding of the technical solutions of the present disclosure, constitute a part of the specification, are used together with the embodiments of the present application to explain the technical solutions of the present disclosure, and do not constitute limitations on the technical solutions of the present disclosure.
FIG. 1 is a scanning electron microscope image of a cobalt-free and nickel-free positive electrode material prepared in one embodiment of the present disclosure at a magnification of 2000 times;
FIG. 2 is a scanning electron microscope image of a cobalt-free and nickel-free positive electrode material prepared in one embodiment of the present disclosure at a magnification of 3000 times;
FIG. 3 is an XRD graph of a cobalt-free and nickel-free positive electrode material prepared in one embodiment of the present disclosure;
FIG. 4 is a curve graph of charging and discharging of a cobalt-free and nickel-free positive electrode material prepared in Comparative Example 1 of the present disclosure in 1^{st} and 2^{nd} weeks; and
FIG. 5 is a curve graph of charging and discharging of a cobalt-free and nickel-free positive electrode material prepared in one embodiment of the present disclosure in 1^{st}, 2^{nd}, and 51^{th} weeks.

### DETAILED DESCRIPTION OF EMBODIMENTS

The technical solutions of the present disclosure will be further illustrated below with reference to the accompanying drawings and through specific examples.

### Example 1

A preparation method for a cobalt-free and nickel-free positive electrode material included the following steps:
(I) Lithium carbonate, sodium carbonate, and manganese carbonate were mixed with a molar ratio of lithium, sodium, and manganese of 0.25: 1: 0.75, and heated at 750°C for 10 h in an air atmosphere with an air flow rate of 7.5 L/min to obtain a cobalt-free and nickel-free matrix material, a general formula of which was NaLi_{0.25}Mn_{0.75}O₂;
(II) The cobalt-free and nickel-free matrix material prepared in step (I), lithium carbonate, and MnO were mixed to obtain a mixture in which a molar ratio of lithium to manganese was 1.2: 1, a melting reaction was performed at 600 °C for 6 h, water was added in a mass twice that of the material after reaction to the material, and the material was stirred and washed for 10 min and then dried; and
(III) The dried cobalt-free and nickel-free positive electrode material was mixed with AlPO₄, and primary calcination was performed at 550°C in the air atmosphere for 6.5 h to coat AlPO₄ with a coating amount of 500 ppm; and the material was mixed with TiO₂, a secondary calcination was performed at 550 °C in an oxygen atmosphere for 6.5 h to coat TiO₂ with a coating amount of 500 ppm to obtain the cobalt-free and nickel-free positive electrode material.

A chemical formula of the cobalt-free and nickel-free positive electrode material prepared in this example was Li_{0.92}Mn_{0.76}O₂, where a molar ratio of lamellar Li₂MnO₃ was 70%.

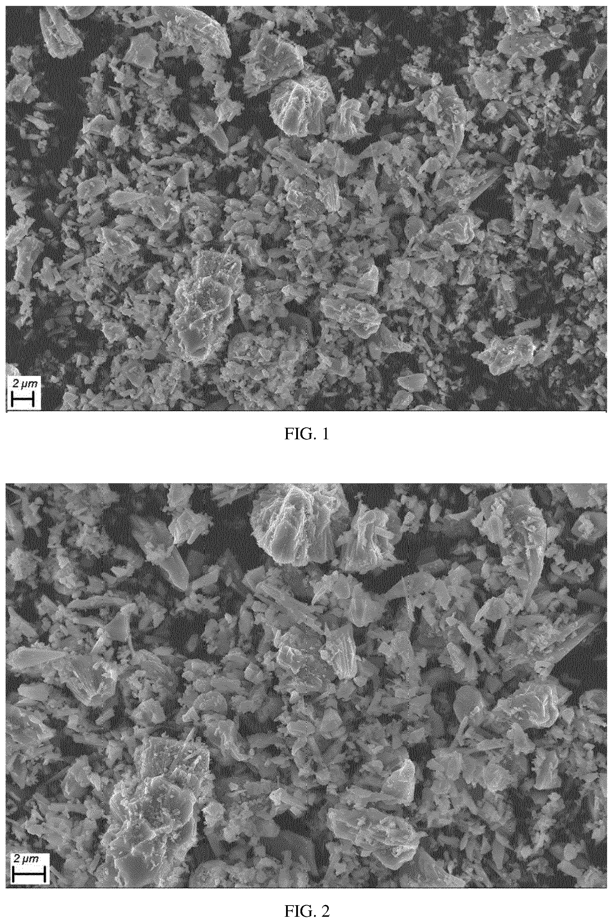

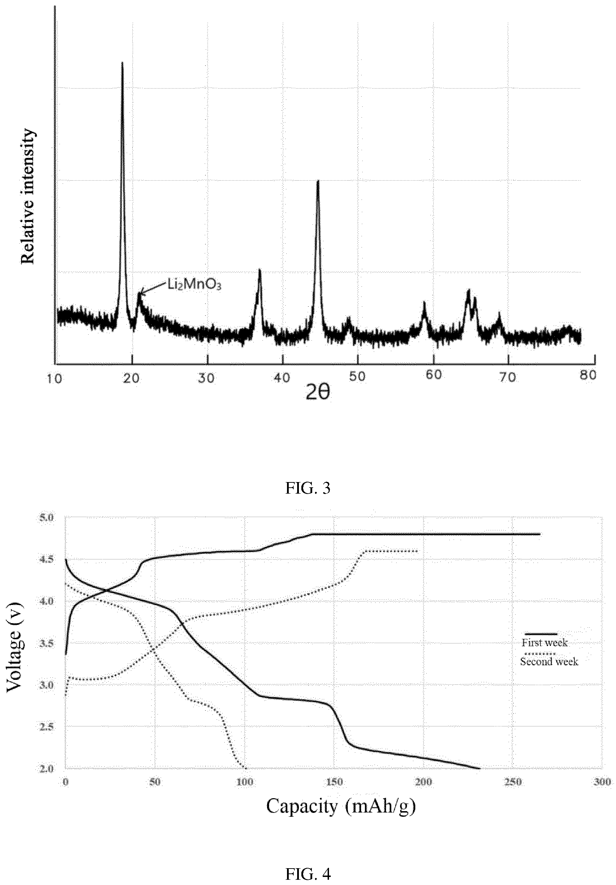

It can be seen from FIG. 1 and FIG. 2 that the cobalt-free and nickel-free positive electrode material prepared in this example had an irregular single crystal structure. FIG. 3 is an XRD characterization graph, showing that the material included lamellar Li₂MnO₃.

### Example 2

A preparation method for a cobalt-free and nickel-free positive electrode material included the following steps:
(I) Lithium hydroxide, sodium acetate, and manganese oxide were mixed with a molar ratio of lithium, sodium, and manganese of 0.25: 1: 0.75, and heated at 500°C for 12 h in an air atmosphere with an air flow rate of 5 L/min to obtain a cobalt-free and nickel-free matrix material, a general formula of which was NaLi_{0.25}Mn_{0.75}O₂;
(II) The cobalt-free and nickel-free matrix material prepared in step (I), lithium hydroxide, and Mn₃O₄ were mixed to obtain a mixture in which a molar ratio of lithium to manganese was 0.9: 1, a melting reaction was performed at 400 °C for 8 h, water was added in a mass twice that of the material after reaction to the material, and the material was stirred and washed for 10 min and then dried; and
(III) The dried cobalt-free and nickel-free positive electrode material was mixed with AlPO₄, and primary calcination was performed at 800°C in the air atmosphere for 5 h to coat AlPO₄ with a coating amount of 1000 ppm; and the material was mixed with TiO₂, a secondary calcination was performed at 700 °C in the air atmosphere for 5.5 h to coat TiO₂ with a coating amount of 1000 ppm to obtain the cobalt-free and nickel-free positive electrode material.

A chemical formula of the cobalt-free and nickel-free positive electrode material prepared in this example was Li_{0.8}Mn_{0.89}O₂, where a molar ratio of lamellar Li₂MnO₃ was 50%.

### Example 3

A preparation method for a cobalt-free and nickel-free positive electrode material included the following steps:
(I) Lithium chloride, sodium chloride, and manganese dioxide were mixed with a molar ratio of lithium, sodium, and manganese of 0.25: 1: 0.75, and heated at 800°C for 8 h in an air atmosphere with an air flow rate of 10 L/min to obtain a cobalt-free and nickel-free matrix material, a general formula of which was NaLi_{0.25}Mn_{0.75}O₂;
(II) The cobalt-free and nickel-free matrix material prepared in step (I), lithium chloride, and MnO₃ were mixed to obtain a mixture in which a molar ratio of lithium to manganese was 1.5: 1, a melting reaction was performed at 800 °C for 4 h, water was added in a mass twice that of the material after reaction to the material, and the material was stirred and washed for 10 min and then dried; and
(III) The dried cobalt-free and nickel-free positive electrode material was mixed with AlPO₄, and primary calcination was performed at 300°C in an oxygen atmosphere for 8 h to coat AlPO₄ with a coating amount of 3000 ppm; and the material was mixed with TiO₂, a secondary calcination was performed at 300°C in the oxygen atmosphere for 8 h to coat TiO₂ with a coating amount of 3000 ppm to obtain the cobalt-free and nickel-free positive electrode material.

A chemical formula of the cobalt-free and nickel-free positive electrode material prepared in this example was Li_{1.05}Mn_{0.7}O₂, where a molar ratio of lamellar Li₂MnO₃ was 87.5%.

### Example 4

A preparation method for a cobalt-free and nickel-free positive electrode material included the following steps:
(I) Lithium fluoride, sodium bicarbonate, and manganese acetate were mixed with a molar ratio of lithium, sodium, and manganese of 0.25: 1: 0.75, and heated at 650°C for 9 h in an air atmosphere with an air flow rate of 7 L/min to obtain a cobalt-free and nickel-free matrix material, a general formula of which was NaLi_{0.25}Mn_{0.75}O₂;
(II) The cobalt-free and nickel-free matrix material prepared in step (I), lithium fluoride, and MnO were mixed to obtain a mixture in which a molar ratio of lithium to manganese was 1: 1, a melting reaction was performed at 700 °C for 5 h, water was added in a mass twice that of the material after reaction to the material, and the material was stirred and washed for 10 min and then dried; and
(III) The dried cobalt-free and nickel-free positive electrode material was mixed with AlPO₄, and primary calcination was performed at 700°C in the air atmosphere for 7 h to coat AlPO₄ with a coating amount of 5000 ppm; and the material was mixed with TiO₂, a secondary calcination was performed at 800 °C in an oxygen atmosphere for 5 h to coat TiO₂ with a coating amount of 5000 ppm to obtain the cobalt-free and nickel-free positive electrode material.

A chemical formula of the cobalt-free and nickel-free positive electrode material prepared in this example was Li_{0.8}Mn_{0.8}O₂, where a molar ratio of lamellar Li₂MnO₃ was 55%.

### Example 5

A preparation method for a cobalt-free and nickel-free positive electrode material included the following steps:
(I) Lithium fluoride, sodium bicarbonate, and manganese acetate were mixed with a molar ratio of lithium, sodium, and manganese of 0.25: 1: 0.75, and heated at 600°C for 9 h in an air atmosphere with an air flow rate of 9 L/min to obtain a cobalt-free and nickel-free matrix material, a general formula of which was NaLi_{0.25}Mn_{0.75}O₂;
(II) The cobalt-free and nickel-free matrix material prepared in step (I), lithium carbonate, and MnO were mixed to obtain a mixture in which a molar ratio of lithium to manganese was 1.3: 1, a melting reaction was performed at 500 °C for 7 h, water was added in a mass twice that of the material after reaction to the material, and the material was stirred and washed for 10 min and then dried; and
(III) The dried cobalt-free and nickel-free positive electrode material was mixed with AlPO₄, and primary calcination was performed at 400°C in an oxygen atmosphere for 7.5 h to coat AlPO₄ with a coating amount of 1500 ppm; and the material was mixed with TiO₂, a secondary calcination was performed at 400°C in the oxygen atmosphere for 7.5 h to coat TiO₂ with a coating amount of 2000 ppm to obtain the cobalt-free and nickel-free positive electrode material.

A chemical formula of the cobalt-free and nickel-free positive electrode material prepared in this example was Li_{0.98}Mn_{0.75}O₂, where a molar ratio of lamellar Li₂MnO₃ was 78%.

### Example 6

Different from Example 1, the molar ratio of lithium to manganese in step (II) was changed to 0.6: 1. A chemical formula of the prepared cobalt-free and nickel-free positive electrode material was Li_{0.5}Mn_{0.83}O₂, where lamellar Li₂MnO₃ was not included.

### Example 7

Different from Example 1, the molar ratio of lithium to manganese in step (II) was changed to 1.7: 1. A chemical formula of the prepared cobalt-free and nickel-free positive electrode material was Li_{1.2}Mn_{0.7}O₂, where a molar ratio of lamellar Li₂MnO₃ was 94%.

### Example 8

Different from Example 1, step (III) was not performed, that is, AlPO₄ coating and TiO₂ coating were not performed.

### Example 9

Different from Example 1, AlPO₄ coating was not performed in step (III).

### Example 10

Different from Example 1, TiO₂ coating was not performed in step (III).

### Example 11

Different from Example 1, the coating amount of AlPO₄ was changed to 300 ppm and the coating amount of TiO₂ was changed to 300 ppm in step (III).

### Example 12

Different from Example 1, the coating amount of AlPO₄ was changed to 6000 ppm and the coating amount of TiO₂ was changed to 6000 ppm in step (III).

### Comparative Example 1

Different from Example 1, MnO was not added in step (II). In the prepared cobalt-free and nickel-free positive electrode material, a molar ratio of lamellar Li₂MnO₃ was 20%.

### Comparative Example 2

Different from Example 1, MnO was replaced with MnO₂ in step (II). In the prepared cobalt-free and nickel-free positive electrode material, a molar ratio of lamellar Li₂MnO₃ was 25%.

The cobalt-free and nickel-free positive electrode material prepared in the examples and comparative examples provided in the present disclosure was assembled into a battery: an appropriate amount of material was coated with slurry uniformly, where the cobalt-free and nickel-free positive electrode material: Sp: PVDF gel = 92: 4: 4, and the solid content of the PVDF gel was 6.05%; and the prepared electrode plate was assembled with a CR2032 shell to form a button battery, where Sp represented conductive carbon black, PVDF represented polyvinylidene fluoride, and CR2032 shell represented a cylindrical shell having a diameter of 20 mm and a height of 3.2 mm.

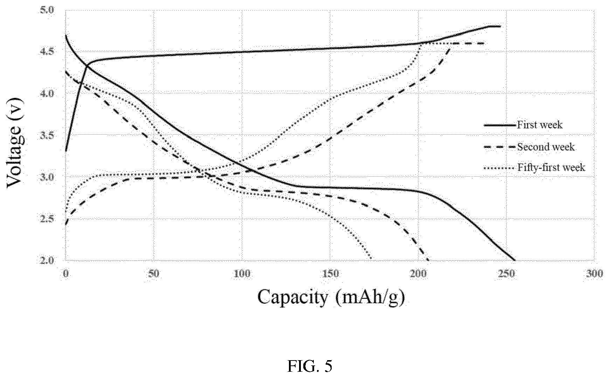

The obtained button battery was tested for cycle performance at a voltage of 2-4.6 V. The test results were shown in Table 1. FIG. 4 shows charging and discharging curves of the battery assembled using the cobalt-free and nickel-free positive electrode material in Comparative Example 1 in 1^{st} and 2^{nd} weeks, and FIG. 5 shows charging and discharging curves of the battery assembled using the cobalt-free and nickel-free positive electrode material in Example 1 in 1^{st}, 2^{nd}, and 51^{st} weeks.

**Table 1**

| Number | A1PO ₄ coatin g amoun t (ppm) | TiO₂ coatin g amoun t (ppm) | 0.1C chargin g capacit y (mAh/g ) | 0.1C dischargin g capacity (mAh/g) | Initial efficienc y (%) | 1C dischargin g capacity (mAh/g) | 20-week capacit y retentio n rate (%) | 50-week capacit y retentio n rate (%) |
|---|---|---|---|---|---|---|---|---|
| Example 1 | 500 | 500 | 250.1 | 244.1 | 97.6 | 205.8 | 88.5 | 85.6 |
| Example 2 | 1000 | 1000 | 258.4 | 254.4 | 98.5 | 204.8 | 90.2 | 84.2 |
| Example 3 | 3000 | 3000 | 259.9 | 255.7 | 98.4 | 206.1 | 98.7 | 90.2 |
| Example 4 | 5000 | 5000 | 253.4 | 246.2 | 97.2 | 203.4 | 91.5 | 85.6 |
| Example 5 | 1500 | 2000 | 259.5 | 251.6 | 97.0 | 204.1 | 94.2 | 85.9 |
| Example 6 | 500 | 500 | 240.2 | 231.1 | 96.2 | 188.2 | 75.4 | 50.6 |
| Example 7 | 500 | 500 | 234.5 | 195.8 | 83.5 | 165.7 | 75.3 | 52.5 |
| Example 8 | 0 | 0 | 259.0 | 254.4 | 98.2 | 205.6 | 75.2 | 40.2 |
| Example 9 | 0 | 500 | 254.4 | 251.1 | 98.7 | 201.1 | 78.4 | 68.9 |
| Example 10 | 500 | 0 | 255.1 | 252.1 | 98.8 | 204.1 | 68.7 | 61.2 |
| Example 11 | 300 | 300 | 240.3 | 221.2 | 92.0 | 189.2 | 85.6 | 65.4 |
| Example 12 | 6000 | 6000 | 246.6 | 231.5 | 93.9 | 193.6 | 90.4 | 84.6 |
| Comparativ e Example 1 | 500 | 500 | 264.9 | 231.5 | 87.4 | 101.4 | 60.2 | 45.2 |
| Comparativ e Example 2 | 500 | 500 | 263.8 | 231.8 | 88.0 | 104.4 | 61.3 | 46.6 |

It can be seen by comparing Example 1 with Examples 6 and 7 that, by controlling the addition amount of the divalent manganese compound, after the cobalt-free and nickel-free matrix material, the divalent manganese compound, and the lithium source were mixed, the molar ratio of lithium to manganese was (0.8-1.5): 1, which effectively inhibited the formation of lamellar LiMnO2, thereby improving the cycle performance of the battery; if the molar ratio of lithium to manganese was less than 0.8: 1, excessive lithium-deficient materials, such as spinel structures, will be formed, resulting in low capacity; and if the molar ratio of lithium to manganese was more than 1.5: 1, cost waste will be caused, and the total alkali content of the material was too high to affect the performance of the material.

It can be seen by comparing Example 1 with Examples 8, 9, and 10 that, through double-layer coating with TiO₂ as an outer coating, TiO₂ bound to Li⁺ diffused from the active material in the coating process to generate Li₂TiO₃, which was a lithium ion conductor; the Li₂TiO₃ generated on the surface can improve the diffusion rate of ions; and AlPO₄ served as an inner coating, Al³⁺ diffused into oxide lattices in the cycling process to stabilize the structure, and PO₄³⁻ interacted with Li⁺ to generate a good lithium ion conductor Li₃PO₄.

It can be seen by comparing Example 1 with Examples 11 and 12 that the coating amount of the AlPO₄ was controlled to 500-5000 ppm; if the coating amount was less than 500 ppm, problems of uneven material coating and thin coating were caused, and the effect of isolation from an electrolytic solution was poor, which increased side reactions, so that the electrical performance of the battery was poor; and if the coating amount is more than 5000 ppm, the coating of the material was too thick, which hindered the intercalation and deintercalation of Li⁺, thereby affecting the capacity and rate performance of the material.

It can be seen by comparing Example 1 with Comparative Examples 1 and 2 that, in combination with FIG. 4 and FIG. 5, there were two capacity plateaus at 3.5-4.5 V, showing the presence of a LiMnO₂ phase in the material; in the cycling process, the lamellar LiMnO₃ and spinel LiMn₂O₄ caused capacity loss, and the disproportionation reaction of Mn³⁺ and the Jahn-Teller effect in the LiMn₂O₄ cycle will lead to severe deterioration of material cycle, so the cycle performance in Comparative Example 1 was poor, and the retention rate was only 60.2% after 20 cycles; and by adding the divalent manganese compound in the preparation process, the generation of the lamellar LiMnO₃ and spinel LiMn₂O₄ was effectively inhibited, and the generation of lamellar Li₂MnO₃ was promoted to effectively improve the cycle performance of the cobalt-free and nickel-free material.

## Claims

1. A preparation method for a cobalt-free and nickel-free positive electrode material, comprising: preparing a cobalt-free and nickel-free matrix material, and mixing the cobalt-free and nickel-free matrix material, a lithium source, and a divalent manganese compound for reaction to obtain the cobalt-free and nickel-free positive electrode material.

2. The preparation method according to claim 1, wherein a general formula of the cobalt-free and nickel-free matrix material is NaₓLi_{y}Mn_{0.75}O₂, wherein 0.8 ≤ x ≤ 1, and 0 ≤ y ≤ 0.35.

3. The preparation method according to claim 1 or 2, wherein a preparation method for the cobalt-free and nickel-free matrix material comprises: mixing a lithium salt, a manganese salt, and a sodium salt, wherein a molar ratio of lithium in the lithium salt, sodium in the sodium salt, and manganese in the manganese salt is (0.2-0.3): (0.9-1.1): (0.65-0.85); and heating the mixture to obtain the cobalt-free and nickel-free matrix material.

4. The preparation method according to any one of claims 1-3, wherein a temperature of the heating in the preparation method for the cobalt-free and nickel-free matrix material is 500-800°C, and time for the heating is 8-12 h.

5. The preparation method according to any one of claims 1-4, wherein the cobalt-free and nickel-free matrix material, the divalent manganese compound, and the lithium source are mixed to obtain a mixture, and a molar ratio of lithium to manganese in the mixture is (0.8-1.5): 1.

6. The preparation method according to any one of claims 1-5, wherein the divalent manganese compound comprises one of or a combination of at least two of MnO, Mn₃O₄, or MnCO₃.

7. The preparation method according to any one of claims 1-6, wherein the mixing reaction is a melting reaction, a temperature of the mixing reaction is 400-800°C, and time for the mixing reaction is 4-8 h.

8. The preparation method according to any one of claims 1-7, wherein the cobalt-free and nickel-free positive electrode material obtained after the mixing reaction is further coated, and a method for the coating comprises the following steps: mixing the cobalt-free and nickel-free positive electrode material obtained by the reaction with AlPO₄, and performing primary calcination to obtain an AlPO₄-coated positive electrode material; and mixing the AlPO₄-coated positive electrode material with TiO₂, and performing secondary calcination to obtain an AlPO₄- and TiO₂-coated cobalt-free and nickel-free positive electrode material.

9. The preparation method according to claim 8, wherein a temperature of the primary calcination is 300-800°C, time for the primary calcination is 5-8 h, and an atmosphere for the primary calcination is air or oxygen.

10. The preparation method according to claim 8 or 9, wherein a temperature of the secondary calcination is 300-800°C, time for the secondary calcination is 5-8 h, and an atmosphere for the secondary calcination is air or oxygen.

11. The preparation method according to any one of claims 8-10, wherein based on a total mass of the cobalt-free and nickel-free positive electrode material, a coating amount of the AlPO₄ is 500-5000 ppm, and a coating amount of the TiO₂ is 500-5000 ppm.

12. A cobalt-free and nickel-free positive electrode material prepared by the preparation method according to any one of claims 1-11, wherein the cobalt-free and nickel-free positive electrode material comprises lamellar LiMnO₃, spinel LiMn₂O₄, and lamellar Li₂MnO₃.

13. The cobalt-free and nickel-free positive electrode material according to claim 12, wherein a molar ratio of the lamellar Li₂MnO₃ in the cobalt-free and nickel-free positive electrode material is 50-90%.

14. A battery, comprising a positive electrode, a negative electrode, and a separator, wherein the cobalt-free and nickel-free positive electrode material according to claim 12 or 13 is used in the positive electrode.
